# EUROPEAN PATENT APPLICATION

(11) **EP 4 621 974 A1**
(43) Date of publication of application: **24.09.2025**
(21) Application number: 25163138.8
(22) Date of filing: 12.03.2025
(51) Int. Cl.: H01M 50/503, H01M 50/516, H01M 50/528

(54) **BATTERY PACK AND BATTERY PACK WELDING METHOD**

(30) Priority: 19.03.2024 KR 20240037920
(71) Applicant: SAMSUNG SDI CO., LTD., Yongin-si, Gyeonggi-do 17084 (KR)
(72) Inventor: PARK, Sanghun, 17084 Yongin-si, Gyeonggi-do (KR)
(74) Representative: Gulde & Partner

(57) **Abstract**

A battery pack may include first, second, third, and fourth welding portions formed on each of a plurality of battery cell surfaces, wherein each of the first, second, third, and fourth welding portions may include first and second curved edges facing each other and first and second straight edges connecting the first and second curved edges to each other, the first and second welding portions may face each other in a diagonal direction, and the third and fourth welding portions may face each other in a diagonal direction between the first and second welding portions.

## Description

### CROSS-REFERENCE TO RELATED APPLICATIONS

### FIELD

The present disclosure relates to a battery pack and a method of welding a battery pack.

### BACKGROUND

Typically, secondary batteries are rechargeable batteries, unlike primary batteries that may not be rechargeable. Secondary batteries may be used as an energy source for mobile devices, electric vehicles, hybrid vehicles, electric bicycles, uninterruptible power supplies, and the like. According to the types of applied external devices, secondary batteries may be used in the form of a single battery cell or a battery pack in which a plurality of battery cells are connected to each other and combined in one unit.

Compact mobile devices such as mobile phones can be operated for a predetermined time with the output and capacity of a single battery. However, for electric vehicles or hybrid vehicles with a large power consumption and that require driving for a long time and high-power driving, a battery pack may be preferred due to the output and capacity problem in that such external devices may require a greater output and capacity. An output voltage or an output current of the battery pack may be increased with the number of built-in battery cells.

### SUMMARY

The present disclosure relates to a battery pack including a plurality of battery cells, in which welding strength may be secured in a resistance welding structure between the battery cell and a cell tab, and relates to a method of welding the battery pack.

However, the technical objectives to be achieved by the disclosure are not limited to the above-described objectives, and other technical objectives that are not mentioned herein would be clearly understood by a person skilled in the art from the description of the disclosure.

Additional aspects will be set forth in part in the description which follows and, in part, will be apparent from the description, or may be learned by practice of the presented embodiments of the present disclosure.

According to a first aspect of the present disclosure a battery pack includes a plurality of battery cell surfaces, each of the plurality of battery cell surfaces comprising a first welding portion, a second welding portion, a third welding portion, and a fourth welding portion formed thereon, wherein each of the first, second, third, and fourth welding portions comprises a first curved edge and a second curved edge facing each other and a first straight edge and a second straight edge connecting the first and second curved edges to each other. The first and second welding portions face each other with the second curved edges in a first diagonal direction, and the third and fourth welding portions face each other with the second curved edges in a second diagonal direction other than the first diagonal direction. The first and forth welding portions face each other with the first straight edge and a second straight edge. In other words, the battery pack includes first, second, third, and fourth welding portions formed on each of a plurality of battery cell surfaces, wherein: each of the first, second, third, and fourth welding portions may include first and second curved edges facing each other and first and second straight edges connecting the first and second curved edges to each other, the first and second welding portions face each other in a diagonal direction, and the third and fourth welding portions face each other in a diagonal direction between the first and second welding portions, a portion in which the first and second welding portions face each other in a diagonal direction and a portion in which the third and fourth welding portions face each other in a diagonal direction are each formed with the second curved edge, and portions in which the first, second, third, and fourth welding portions face each other in neighboring directions may be formed with the first and second straight edges.

The first and second welding portions may be formed symmetrically to each other with respect to a center point on each of the plurality of battery cell surfaces.

The third and fourth welding portions may be formed symmetrically to each other with respect to a center point on each of the plurality of battery cell surfaces.

The third welding portion may be formed apart from the first welding portion by a second distance and apart from the second welding portion by a first distance, and the fourth welding portion may be formed apart from the first welding portion by the first distance and apart from the second welding portion by the second distance.

The first distance and the second distance may be the same (e.g., a same distance).

The third and fourth welding portions may be formed at positions rotated by 90 degrees with respect to the center point from the first and second welding portions.

The first curved edge may be formed as an arc-shaped edge with respect to a first center point, and the second curved edge may be formed as an arc-shaped edge with respect to a second center point.

A radius of curvature of the second curved edge (with respect to the second center point) may be less than a radius of curvature of the first curved edge (with respect to the first center point).

The first straight edge and the second straight edge of each of the first, second, third, and fourth welding portions may extend in directions perpendicular to each other.

The first straight edge and the second straight edge of each of the first, second, third, and fourth welding portions may extend in neighboring directions.

The battery pack may further include fifth and sixth welding portions formed on each of the plurality of battery cell surfaces, wherein the first, second, third, fourth, fifth, and sixth welding portions are circularly disposed to be equally apart from each other with respect to the center point on each of the plurality of battery cell surfaces.

According to the second aspect of the present disclosure, a method of welding a battery pack includes forming first and second welding portions apart from each other on a battery cell surface by performing welding on the battery cell surface with first and second welding rod welding portions of a welding rod facing each other, and forming, on the battery cell surface, third and fourth welding portions apart from each other and apart from the first and second welding portions, by performing welding on the battery cell surface with the first and second welding rod welding portions of the welding rod facing each other.

In the forming of the first and second welding portions apart from each other on the battery cell surface by performing welding on the battery cell surface with the first and second welding rod welding portions of the welding rod facing each other, the first and second welding portions may be formed symmetrically to each other with respect to a center point on the battery cell surface.

In the forming, on the battery cell surface, of the third and fourth welding portions apart from each other and apart from the first and second welding portions, by performing welding on the battery cell surface with the first and second welding rod welding portions of the welding rod facing each other, the third and fourth welding portions may be formed symmetrically to each other with respect to a center point on the battery cell surface.

In the forming, on the battery cell surface, of the third and fourth welding portions apart from each other and apart from the first and second welding portions, by performing welding on the battery cell surface with the first and second welding rod welding portions of the welding rod facing each other, the third welding portion may be formed apart from the first welding portion by a second distance and apart from the second welding portion by a first distance, and the fourth welding portion may be formed apart from the first welding portion by the first distance and apart from the second welding portion by the second distance.

Other aspects, features, and advantages than those described above will become apparent from the following drawings, claims, and detailed description of the disclosure.

### BRIEF DESCRIPTION OF THE DRAWINGS

The above and other aspects, features, and advantages of some embodiments of the present disclosure will be more apparent from the following description taken in conjunction with the accompanying drawings, in which:
FIG. 1 is an exploded perspective view of a battery pack, according to some embodiments;
FIG. 2 is a perspective view of an assembled battery pack, according to some embodiments;
FIG. 3 illustrates the shape of a welding rod, according to an embodiment;
FIG. 4 is a view showing the shape of a welding portion formed on a battery cell surface, according to an embodiment;
FIG. 5 is a view showing an effective view of welding strength, according to an embodiment;
FIG. 6 is a view showing the shape of a welding portion formed on the battery cell surface of FIG. 4, according to another embodiment;
FIG. 7 is a flowchart showing a method of welding a battery pack, according to an embodiment; and
FIG. 8 is a view showing formation of the welding portion on the battery cell surface of FIG. 4 in a welding order, according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, one or more embodiments are described in detail with reference to the accompanying drawings. Terms and words used in this specification and claims should not be construed as limited to their ordinary or dictionary meanings, and must be interpreted as meanings and concepts consistent with the technical idea of the disclosure based on the principle that the inventor can appropriately define the concept of the term in order to explain the disclosure in the most suitable and/or appropriate way. Accordingly, various embodiments of the disclosure and terms used therein are not intended to limit the disclosure to particular modes of practice, and it is to be appreciated that various modifications, equivalents, and/or alternatives that do not depart from the technical scope of the disclosure are encompassed in the disclosure. Furthermore, in the disclosure, terms such as "include" or "comprise" may be construed to denote a certain characteristic, number, step, operation, component, or a combination thereof, but may not be construed to exclude the existence of or a possibility of addition of one or more other characteristics, numbers, steps, operations, components, or combinations thereof. Furthermore, in describing the embodiments of the disclosure, "can do..." or "can be..." may include "one or more embodiments of the disclosure."

Furthermore, to facilitate understanding of the disclosure, the accompanying drawings are not drawn to an actual scale and the dimensions of some components may be exaggerated. Furthermore, in different embodiments, like reference numerals may be assigned to like elements.

Two objects in comparison being the same refers to both being "substantially the same." Accordingly, being substantially the same may include a case having a deviation that is considered low to those of ordinary skill in the art, for example a deviation within 5%. Furthermore, a certain parameter being uniform in a certain area may refer to being uniform from an average perspective.

Terms such as "first" and "second" are used herein merely to describe a variety of components, but the components are not limited by the terms. Such terms are used only for the purpose of distinguishing one component from another component. For example, unless specified to the contrary, the first component may be the second component, and vice versa.

Throughout the disclosure, an expression used in a singular form in the specification also includes the expression in its plural form unless clearly specified otherwise in context.

When a certain component is described to be arranged or to be "on" or "on the top of" another component, the component should be construed to be arranged to be on an upper surface (or lower surface) of the component, but also to allow any other component interposed therebetween.

Furthermore, when a certain component is described to be "connected," "coupled," or "linked" to another component, the components may be directly connected or linked to each other, but it may be interpreted that any other component may be "interposed" between the components, or the respective components may be "connected," "coupled," or "linked" via a third component. Furthermore, when a certain portion is electrically coupled to another portion, this includes not only a case of being directly connected to each other, but also a case of being connected to each other via a third portion interposed therebetween.

Throughout the disclosure, the expression "A and/or B" refers to A, B, or A and B, unless specifically stated to the contrary. In other words, the expression "and/or" includes any combination or combination of a plurality of items listed. The expression "C to D" refers to C or more and D or less, unless specifically stated to the contrary.

In the specification, the terms used herein are to describe embodiments of the disclosure, but are not intended to limit the disclosure.

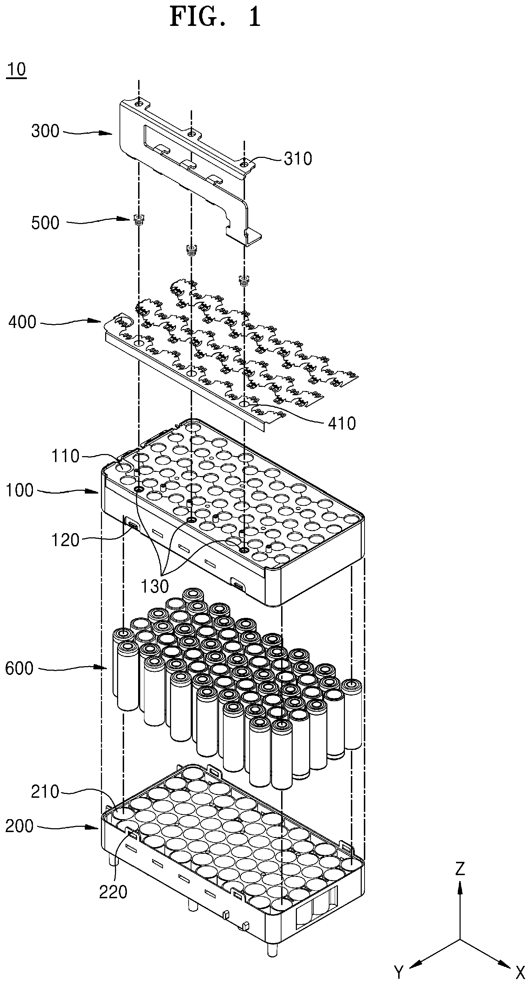

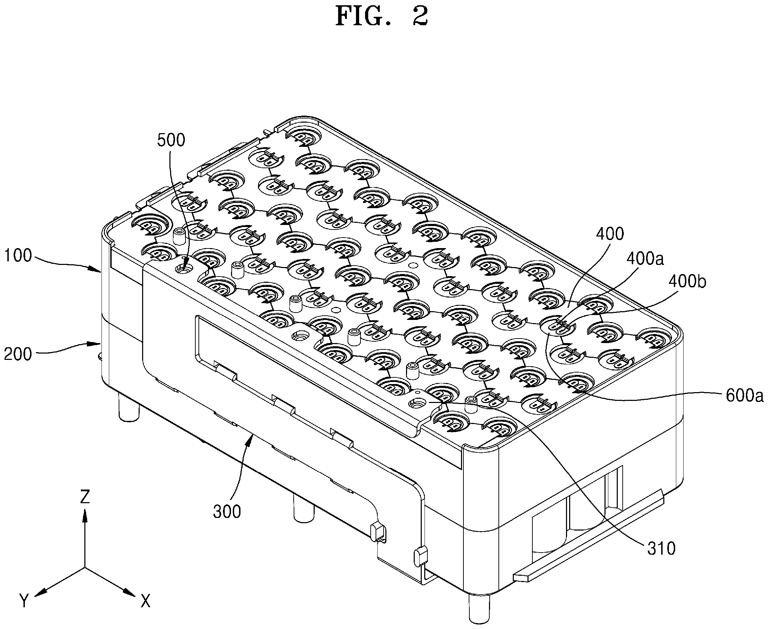

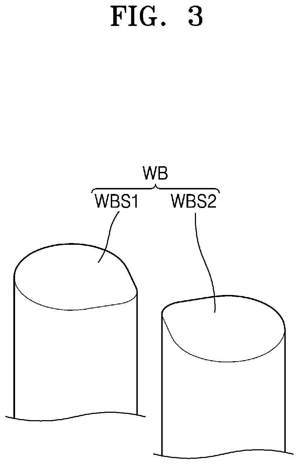

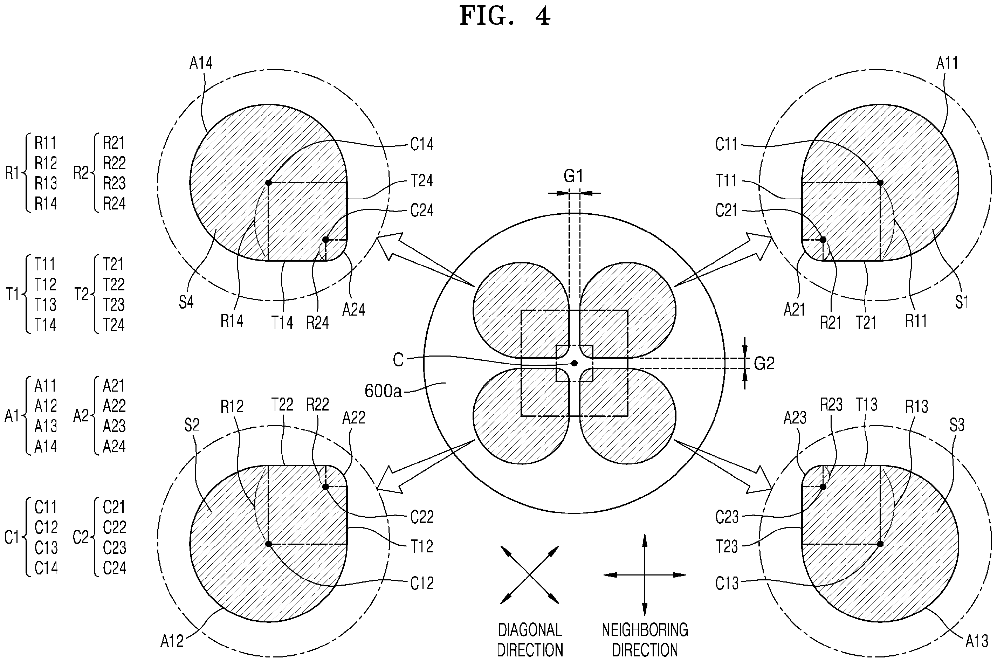

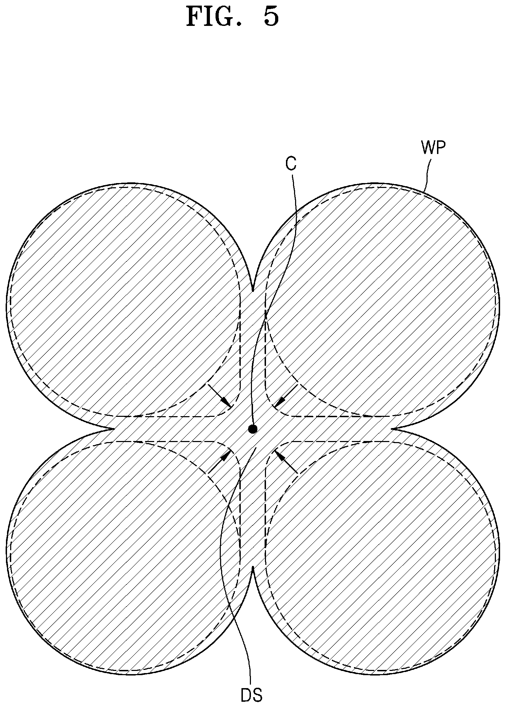

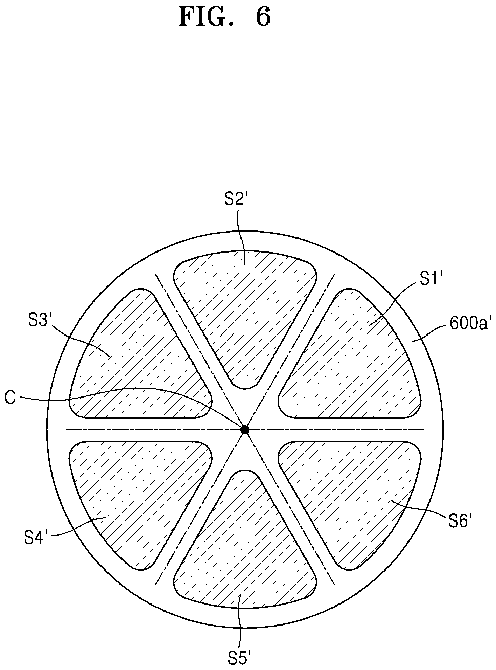

FIG. 1 is an exploded perspective view of a battery pack 10, according to some embodiments. FIG. 2 is a perspective view of an assembled battery pack 10, according to some embodiments. FIG. 3 illustrates the shape of a welding rod WB, according to an embodiment. FIG. 4 is a view showing the shape of a welding portion formed on a battery cell surface 600a, according to an embodiment. FIG. 5 is a view showing an effective view of welding strength, according to an embodiment. FIG. 6 is a view showing the shape of a welding portion formed on the battery cell surface 600a, according to another embodiment.

The battery module 10 includes a plurality of battery cells 600 and may be applied to large applications such as an energy storage system (ESS), or small and medium applications such as power tools, electronic devices, and the like. Alternatively, the battery module 10 may be applied to electric bicycles, electric vehicles, or the like. The battery module 10 may be used individually or together with other battery modules 10 for forming a battery pack.

The battery module 10 may include an upper holder 100, a lower holder 200, a busbar 300, a cell tab 400, a connector 500, and the battery cells 600.

The upper holder 100 and the lower holder 200 may hold and support the battery cells 600. For example, as illustrated in FIGS. 1 and 2, the upper holder 100 and the lower holder 200 may be respectively located in an upper portion and a lower portion of the battery module 10, and may accommodate the battery cells 600 therein. The upper holder 100 and the lower holder 200 may respectively include openings 110 and 210 into which the respective battery cells 600 are inserted. The openings 110 and 210 may have sizes and shapes corresponding to the battery cells 600. For example, the battery cells 600 may have a cylindrical shape, and the openings 110 and 210 may be circular. The number of the openings 110 and 210 may be the same as the number of the battery cells 600. When the battery cells 600 are inserted into the upper holder 100 and the lower holder 200, some of the battery cells 600 may be placed with positive electrodes facing upwards, and some other battery cells 600 may be placed with negative electrodes facing upwards.

The upper holder 100 may include a connection protrusion 120, and the lower holder 200 may include a connection hole 220. For example, as illustrated in FIG. 1, the connection protrusion 120 may be formed on a side surface of the upper holder 100, and the connection hole 220 may be formed in (and/or on) a side surface of the lower holder 200. The connection protrusion 120 and the connection hole 220 may be formed at positions corresponding to each other, and as the connection protrusion 120 is inserted into/detached from the connection hole 220, the upper holder 100 and the lower holder 200 may be combined with/separated from each other. The connection protrusion 120 may be formed at one or more (e.g., two) positions on at least one of both side surfaces of the upper holder 100. The connection hole 220 may be formed at one or more (e.g., two) positions in at least one of both side surfaces of the lower holder 200.

The upper holder 100 and the lower holder 200 may have sizes and shapes corresponding to each other. For example, the upper holder 100 and the lower holder 200 may each have a shape of a rectangular cuboid long in the longitudinal direction (e.g., an X-axis direction in FIG. 1) of the battery module 10.

The upper holder 100 may include an embedded hole 130. For example, as illustrated in FIG. 1, the embedded hole 130 may be formed at one or more positions in an upper surface of the upper holder 100. A first protruding portion 310 of the busbar 300 and a second protruding portion 410 of the cell tab 400 may be located in each embedded hole 130 to correspond to each other. Furthermore, the connector 500 may be inserted into each embedded hole 130. As a connection member, such as a bolt and the like, is inserted into the connector 500, the upper holder 100, the busbar 300, and the cell tab 400 may be electrically connected to one another.

The upper holder 100 may be molded with the connector 500 therein. For example, before the upper holder 100 is molded, the upper holder 100 may be molded with the connector 500 seated at a position corresponding to the embedded hole 130. In other words, the connector 500 may be insert-molded in the upper holder 100.

In some examples, the upper holder 100 and the lower holder 200 may include a plastic material.

The busbar 300 may electrically connect the battery cells 600 to an external device, such as a battery monitoring system (BMS) and the like. For example, while the battery cells 600 are electrically connected to each other by the cell tab 400, the cell tab 400 may be connected to the busbar 300. The busbar 300 may be in direct contact with the cell tab 400 or may be electrically connected to the cell tab 400 through the connector 500. The busbar 300 may include a conductive material such as a metal and the like.

The busbar 300 may include the first protruding portion 310. For example, as illustrated in FIG. 1, the busbar 300 may include one or more first protruding portions 310 protruding toward the inside of the battery module 10. The one or more first protruding portions 310 may be apart from each other in the longitudinal direction (e.g., the X-axis direction in FIG. 1) of the busbar 300, and may each include a hole therein. The first protruding portion 310 may be located to correspond to the second protruding portion 410 and the embedded hole 130 (e.g., may overlap such elements).

The cell tab 400 may electrically connect the battery cells 600 to each other. For example, the cell tab 400 may include a plurality of cell tabs, and each of the cell tabs 400 may electrically connect the battery cells 600 having the same polarity. Some of the cell tabs 400 may extend toward the openings 110 of the upper holder 100 to be in contact with the electrodes of the battery cells 600 inserted in the openings 110. The cell tab 400 may include a conductive material such as a metal and the like.

The cell tab 400 may be in contact with the busbar 300. For example, as illustrated in FIG. 1, any one of the cell tabs 400 may be located at an edge of the upper holder 100 adjacent to the busbar 300. The cell tabs 400 at the edge of the upper holder 100 may be located on the upper holder 100 with a part of cell tabs 400 located on the upper surface of the upper holder 100 and another part of cell tabs 400 extending downwards to cover the edge of the upper holder 100. In this state, the busbar 300 may be located on the cell tab 400 corresponding thereto and in contact with the cell tab 400.

The cell tab 400 may include the second protruding portion 410. For example, as illustrated in FIG. 1, the cell tab 400 may include one or more second protruding portions 410 protruding toward the inside of the battery module 10. The one or more second protruding portions 410 may be apart from each other in the longitudinal direction (e.g., the X-axis direction in FIG. 1) of the busbar 300, and may include a hole therein. The second protruding portion 410 may be located to correspond to the first protruding portion 310 and the embedded hole 130.

The connector 500 may be located on the upper holder 100, may physically and/or electrically connect the busbar 300 and the cell tab 400 to each other, and may fix the busbar 300 and the cell tab 400 to the upper holder 100. The connector 500 may be at least partially embedded in the upper surface of the upper holder 100 and at least partially exposed from the upper surface of the upper holder 100. Whether the connector 500 is embedded at a regular (e.g., desired) position of the upper holder 100 may be checked based on the state of the connector 500 exposed to the outside (e.g., the rotation or tilting of the connector 500 and/or a degree thereof, an exposure amount of the connector 500, etc.).

The connector 500 may be embedded in the embedded hole 130, and may be connected to the first protruding portion 310 of the busbar 300 and the second protruding portion 410 of the cell tab 400 through a fastening member such as a bolt and/or the like. The connector may include the fastening member, in some embodiments. The connector 500 and the fastening member may include a conductive material such as a metal and/or the like. Accordingly, when the fastening member is inserted into the first protruding portion 310, the second protruding portion 410 and the connector 500, and the connector 500, the busbar 300, and the cell tab 400 may be electrically connected to one another. Furthermore, as the fastening member is inserted into the connector 500, the busbar 300 and the cell tab 400 may be physically connected to each other.

Referring to FIG. 2, the cell tab 400 may include a first tab 400a and a second tab 400b. The first tab 400a and the second tab 400b may be combined with and/or connected to the battery cell surface 600a by welding. In this state, the first tab 400a and the second tab 400b may be respectively connected to a positive electrode and a negative electrode of the battery cells 600.

The first tab 400a and the second tab 400b may be connected to the positive electrode and the negative electrode of the battery cells 600 through welding portions of the battery cell surface 600a formed apart from each other. In this state, the welding portions respectively connected to the first tab 400a and the second tab 400b are formed apart from each other so as to prevent electric connection between the welding portions.

Referring to FIG. 3, the welding rod WB for forming the welding portions on the battery cell surface 600a may have a structure in which two welding rods are formed as one set. In this state, the welding rod WB may include a material obtained by cylindrically processing a copper (Cu) alloy. The welding of the battery cell surface 600a using the welding rod WB may include resistance welding. The battery cell surface 600a can be formed of nickel, nickel-plated steel, aluminum, or copper.

A plurality of welding portions may be formed on the battery cell surface 600a by using two welding rod welding portions WBS1 and WBS2 of the welding rod WB. In this state, the shape of the welding portion may be determined based on the shapes of the two welding rod welding portions WBS1 and WBS2.

Referring to FIG. 4, a battery pack according to an embodiment includes first, second, third, and fourth welding portions (e.g., first welding portion S1, second welding portion S2, third welding portion S3, and fourth welding portion S4) formed on each of a plurality of battery cell surfaces 600a.

In this state, the first, second, third, and fourth welding portions S1, S2, S3, and S4 include first and second curved edges A1 and A2 facing each other and first and second straight edges T1 and T2 connecting the first and second curved edges A1 and A2 to each other.

The first and second welding portions S1 and S2 may face each other in a diagonal direction, and the third and fourth welding portions S3 and S4 may face each other in another diagonal direction (e.g., between the first and second welding portions S1 and S2). Furthermore, a portion in which the first and second welding portions S1 and S2 face each other in a diagonal direction and a portion in which the third and fourth welding portions S3 and S4 face each other in a diagonal direction are each formed with the second curved edge A2, and portions in which the first, second, third, and fourth welding portions S1, S2, S3, and S4 face each other in neighboring directions are formed with the first and second straight edges T1 and T2.

The first and second welding portions S1 and S2 may be formed symmetrically to each other with respect to a center point C on the battery cell surface 600a. In this state, the center point C may not be a center point of the battery cell surface 600a, and may be a specific point on the battery cell surface 600a. The central point C may be any part of the central space on the battery cell surface 600a and the space between the welding parts facing each other.

Furthermore, the third and fourth welding portions S3 and S4 may be formed symmetrically to each other with respect to the center point C on the battery cell surface 600a.

The third welding portion S3 shown in FIG. 4 is formed apart from the first welding portion S1 by a second distance G2 and from the second welding portion S2 by a first distance G1, and the fourth welding portion S4 is formed apart from the first welding portion S1 by the first distance G1 and from the second welding portion S2 by the second distance G2. In some embodiments, the first distance G1 may be the same (e.g., a same distance) as the second distance G2.

The third and fourth welding portions S3 and S4 may be formed at positions rotated by 90 degrees with respect to the center point C from the first and second welding portions S1 and S2. Accordingly, the first, second, third, and fourth welding portions S1, S2, S3, and S4 may be disposed with the same intervals in a rotation direction with respect to the center point C.

The first curved edge A1 may be formed as an arc-shaped edge with respect to a first center point C1, and the second curved edge A2 may be formed as an arc-shaped edge with respect to a second center point C2. In this state, a radius of curvature of the second curved edge A2 (with respect to the second center point C2) may be less than a radius of curvature of the first curved edge A1 (with respect to the first center point C1).

Furthermore, the first straight edge T1 and the second straight edge T2 of each of the first, second, third, and fourth welding portions S1, S2, S3, and S4 may extend in directions perpendicular to each other. Furthermore, the first straight edge T1 and the second straight edge T2 of each of the first, second, third, and fourth welding portions S1, S2, S3, and S4 may extend in the neighboring directions, respectively. In some embodiments, the neighboring directions may be parallel directions.

In detail, the first welding portion S1 may be formed symmetrically to the second welding portion S2 with respect to the center point C and also mirror-symmetrically to (e.g., having mirror symmetry with) the third and fourth welding portions S3 and S4.

The first welding portion S1 may include a first-1 curved edge A11 with respect to a first-1 center point C11 and a second-1 curved edge A21 with respect to a second-1 center point C21, and a first-1 straight edge T11 and a second-1 straight edge T21 connecting the first-1 curved edge A11 and the second-1 curved edge A21. In this state, a radius R21 of curvature of the second-1 curved edge A21 may be less than a radius R11 of curvature of the first-1 curved edge A11.

The first-1 straight edge T11 may be disposed to correspond to a second-4 straight edge T24 of the fourth welding portion S4 with the first distance G1 therebetween. The second-1 straight edge T21 may be disposed to correspond to a first-3 straight edge T13 of the third welding portion S3 with the second distance G2 therebetween.

The second welding portion S2 may be formed symmetrically to the first welding portion S1 with respect to the center point C and also mirror-symmetrically to the third and fourth welding portions S3 and S4.

The second welding portion S2 may include a first-2 curved edge A12 with respect to a first-2 center point C12 and a second-2 curved edge A22 with respect to a second-2 center point C22, and a first-2 straight edge T12 and a second-2 straight edge T22 connecting the first-2 curved edge A12 and the second-2 curved edge A22. In this state, a radius R22 of curvature of the second-2 curved edge A22 may be less than a radius R12 of curvature of the first-2 curved edge A12.

The first-2 straight edge T12 may be disposed to correspond to a second-3 straight edge T23 of the third welding portion S3 with the first distance G1 therebetween. The second-2 straight edge T22 may be disposed to correspond to a first-4 straight edge T14 of the fourth welding portion S4 with the second distance G2 therebetween.

The third welding portion S3 may be formed symmetrically to the fourth welding portion S4 with respect to the center point C and also mirror-symmetrically to the first and second welding portions S1 and S2.

The third welding portion S3 may include a first-3 curved edge A13 with respect to a first-3 center point C13 and a second-3 curved edge A23 with respect to a second-3 center point C23, and the first-3 straight edge T13 and the second-3 straight edge T23 connecting the first-3 curved edge A13 and the second-3 curved edge A23. In this state, a radius R23 of curvature of the second-3 curved edge A23 may be less than a radius R13 of curvature of the first-3 curved edge A13.

The first-3 straight edge T13 may be disposed to correspond to the second-1 straight edge T21 of the first welding portion S1 with the second distance G2 therebetween. The second-3 straight edge T23 may be disposed to correspond to the first-2 straight edge T12 of the second welding portion S2 with the first distance G1 therebetween.

The fourth welding portion S4 may be formed symmetrically to the third welding portion S3 with respect to the center point C and also mirror-symmetrically to the first and second welding portions S1 and S2.

The fourth welding portion S4 may include a first-4 curved edge A14 with respect to a first-4 center point C14 and a second-4 curved edge A24 with respect to a second-4 center point C24, and the first-4 straight edge T14 and the second-4 straight edge T24 connecting the first-4 curved edge A14 and the second-4 curved edge A24. In this state, a radius R24 of curvature of the second-4 curved edge A24 may be less than a radius R14 of curvature of the first-4 curved edge A14.

The first-4 straight edge T14 may be disposed to correspond to the second-2 straight edge T22 of the second welding portion S2 with the second distance G2 therebetween. The second-4 straight edge T24 may be disposed to correspond to the first-1 straight edge T11 of the first welding portion S1 with the first distance G1 therebetween.

Referring to FIG. 5, an effective range WP of welding strength including four welding portions is illustrated. As illustrated in FIG. 5, the welding portion may be formed by using the welding rod WB. In this state, as the area of the welding portion increases, welding strength between the cell tab 400 and the battery cell 600 may be improved.

When the respective welding portions are connected to each other, interference between the electrodes may occur, and thus, the inventor has recognized it is necessary to minimize the interval between the welding portions and the area of a dead space (DS) in FIG. 5 and simultaneously maximize the area of the welding portion within the effective range WP of welding strength.

Accordingly, according to the present embodiments, without making the shape of the welding portion in a general circular shape, as illustrated in FIG. 5, in order to minimize the area of the dead space DS which is a middle space of the welding portions and in which no welding portion is formed, the second curved edge having a radius of curvature less than that of the first curved edge is formed to face the center point. In this state, the first distance G1 and the second distance G2 may be provided as a minimum distance at which no interference occurs between two welding portions during welding.

Referring to FIG. 6, a battery pack according to another embodiment further includes fifth and sixth welding portions S5' and S6' formed on each of a plurality of battery cell surfaces 600a', and first to sixth welding portions (e.g., first welding portion S1', second welding portion S2', third welding portion S3', fourth welding portion S4', fifth welding portion S5', and sixth welding portion S6') may be circularly disposed to be equally apart from each other with respect to the center point C (e.g., may be radially disposed in a circle). However, the number of welding portions is not limited thereto, and a variety of numbers may be possible if the number is even-numbered, for example, two, four, six, and the like because the positive electrode and the negative electrode are connected to each other. (e.g., One of the welding portions is connected to the anode, and the other is connected to the cathode.)

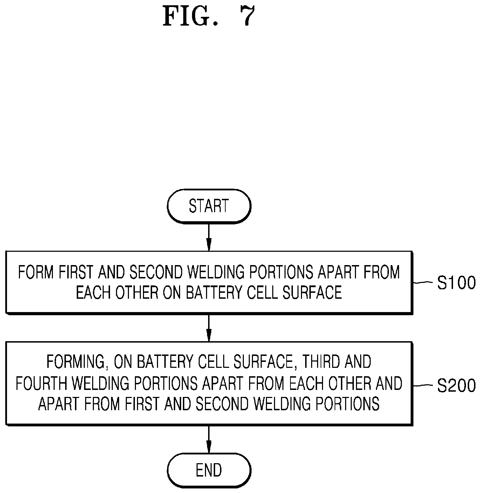

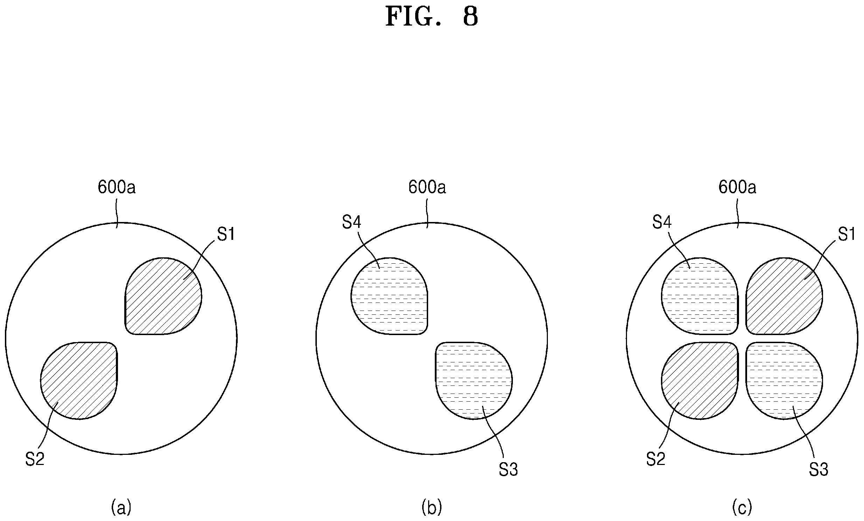

FIG. 7 is a flowchart showing a method of welding a battery pack, according to an embodiment. FIG. 8 is a view showing that a welding portion is formed on the battery cell surface in a welding order according to an embodiment.

Referring to FIGS. 7 and 8, a method of welding a battery pack according to an embodiment includes (simultaneously) forming the first and second welding portions S1 and S2 apart from each other on a battery cell surface by performing welding on the battery cell surface 600a with first and second welding rod welding portions WBS1 and WBS2 of a welding rod facing each other (See Fig 8a, and Fig. 7, S100). The method (then) further includes (simultaneously) forming the third and fourth welding portions S3 and S4 apart from each other and apart from the first and second welding portions S1 and S2, on the battery cell surface 600a, by performing welding again on the battery cell surface 600a with the first and second welding rod welding portions WBS1 and WBS2 of the welding rod facing each other (See Fig 8b, and Fig. 7, S200).

In this state, when performing welding again on the battery cell surface 600a with the first and second welding rod welding portions WBS1 and WBS2, compared with the previous welding, the welding may be performed again by rotating the welding rod WB by 90 degrees with respect to the center point C.

In the forming of the first and second welding portions S1 and S2 apart from each other on a battery cell surface by performing welding on the battery cell surface 600a with the first and second welding rod welding portions WBS1 and WBS2 of the welding rod facing each other, the first and second welding portions S1 and S2 may be formed symmetrically to each other with respect to the center point C on the battery cell surface 600a.

Furthermore, in the forming of the third and fourth welding portions S3 and S4 apart from each other and apart from the first and second welding portions S1 and S2, on the battery cell surface 600a, by performing welding again on the battery cell surface 600a with the first and second welding rod welding portions WBS1 and WBS2 of the welding rod facing each other, the third and fourth welding portions S3 and S4 may be formed symmetrically to each other with respect to the center point C on the battery cell surface 600a.

In this state, the third welding portion S3 may be formed apart from the first welding portion S1 by the second distance G2 and also apart from the second welding portion S2 by the first distance G1, and the fourth welding portion S4 may be formed apart from the first welding portion S1 by the first distance G1 and also apart from the second welding portion S2 by the second distance G2.

According to one or more embodiments, a battery pack with improved welding strength may be provided by maximizing welding strength by utilizing the dead space within the effective range of welding strength, and maintaining the distance between the respective electrodes of a cell tab that can be a major factor in the process management and simultaneously securing a maximum area of resistance welding.

However, the effects of the present disclosure are not limited to the above-described effects, and other various effects that are not described in the specification may be clearly understood from the foregoing descriptions by one skilled in the art to which the present disclosure belongs.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of battery cell surfaces (600a, 600a'), each of the plurality of battery cell surfaces (600a, 600a') comprising a first welding portion (S1, S1'), a second welding portion (S2, S2'), a third welding portion (S3, S3'), and a fourth welding portion (S4, S4') formed thereon;
wherein:
each of the first, second, third, and fourth welding portions (S1, S2, S3, S4) comprises a first curved edge (A1, A11, A12, A13, A14) and a second curved edge (A2, A21, A22, A23, A24) facing each other and a first straight edge (T1) and a second straight edge (T2) connecting the first and second curved edges (A1, A2) to each other,
the first and second welding portions (S1, S2; S1', S2') face each other with the second curved edges (A2, A21, A22) in a first diagonal direction, and
the third and fourth welding portions (S3, S4; S3', S4') face each other with the second curved edges (A2, A23, A24) in a second diagonal direction other than the first diagonal direction; and
the first and forth welding portions (S1, S4; S1', S4') face each other with the first straight edge (T1, T11) and a second straight edge (T2, T24).

2. The battery pack according to claim 1, wherein the first and second welding portions (S1, S2) are formed symmetrically to each other with respect to a center point (C) on each of the plurality of battery cell surfaces (600a, 600a').

3. The battery pack according to claim 1 or 2, wherein the third and fourth welding portions (S3, S4) are formed symmetrically to each other with respect to a center point (C) on each of the plurality of battery cell surfaces (600a, 600a').

4. The battery pack according to one of claims 1 to 3, wherein the third welding portion (S3) is formed apart from the first welding portion (S1) by a second distance (G2) and apart from the second welding portion (S2) by a first distance (G1), and
the fourth welding portion (S4) is formed apart from the first welding portion (S1) by the first distance (G1) and apart from the second welding portion (S2) by the second distance (G2).

5. The battery pack according to claim 4, wherein the first distance (G1) and the second distance (G2) are a same distance.

6. The battery pack according to one of the preceding claims, wherein the third and fourth welding portions (S3, S4) are formed at positions rotated by 90 degrees with respect to a center point (C) from the first and second welding portions (S1, S2).

7. The battery pack according to one of the preceding claims, wherein the first curved edge (A1) is formed as an arc-shaped edge with respect to a first center point (R1), and
the second curved edge (A2) is formed as an arc-shaped edge with respect to a second center point (R2).

8. The battery pack according to claim 7, wherein a radius of curvature of the second curved edge (A2) is less than a radius of curvature of the first curved edge (A1).

9. The battery pack according to one of the preceding claims, wherein the first straight edge (T1) and the second straight edge (T2) of each of the first, second, third, and fourth welding portions (S1, S2, S3, S4) extend in directions perpendicular to each other.

10. The battery pack according to one of the preceding claims, wherein the first straight edge (T1) and the second straight edge (T2) of each of the first, second, third, and fourth welding portions (S1, S2, S3, S4) extend in neighboring directions.

11. The battery pack of claim 1, further comprising fifth welding portion (S5') and sixth welding portion (S6') formed on each of the plurality of battery cell surfaces (600a'),
wherein the first, second, third, fourth, fifth and sixth welding portions (S1', S2', S3', S4', S5', S6') are circularly disposed to be equally spaced apart from each other with respect to the center point (C) on each of the plurality of battery cell surfaces.

12. A method of welding a battery pack, the method comprising:
forming a first welding portion (S1) and a second welding portion (S2) apart from each other on a battery cell surface (600a, 600a') by performing welding on the battery cell surface (600a, 600a') with a first welding rod welding portion (WBS1) and second welding rod welding portion (WBS2) of a welding rod (WB) facing each other; and
forming, on the battery cell surface (600a, 600a'), a third welding portion (S3) and a fourth welding portion (S4) apart from each other and apart from the first and second welding portions (S1, S2) by performing welding on the battery cell surface (600a, 600a') with the first and second welding rod welding portions (WBS1, WBS2) of the welding rod (WB) facing each other.

13. The method according to claim 12, wherein, in the forming of the first and second welding portions (S1, S2) apart from each other on the battery cell surface (600a, 600a') by performing welding on the battery cell surface (600a, 600a') with the first and second welding rod welding portions (WBS1, WBS2) of the welding rod (WB) facing each other,
the first and second welding portions (S1, S2) are formed symmetrically to each other with respect to a center point (C) on the battery cell surface (600a, 600a').

14. The method according to claim 12 or 13, wherein, in the forming, on the battery cell surface (600a, 600a'), of the third and fourth welding portions (S3, S4) apart from each other and apart from the first and second welding portions (S1, S2) by performing welding on the battery cell surface (600a, 600a') with the first and second welding rod welding portions (WBS1, WBS2) of the welding rod (WB) facing each other,
the third and fourth welding portions (S3, S4) are formed symmetrically to each other with respect to a center point on the battery cell surface (600a, 600a').

15. The method according to claim 12, wherein, in the forming, on the battery cell surface (600a, 600a'), of the third and fourth welding portions (S3, S4) apart from each other and apart from the first and second welding portions (S1, S2) by performing welding on the battery cell surface (600a, 600a') with the first and second welding rod welding portions (WBS1, WBS2) of the welding rod (WD) facing each other,
the third welding portion (S3) is formed apart from the first welding portion (S1) by a second distance (G2) and apart from the second welding portion (S2) by a first distance G1), and
the fourth welding portion (S4) is formed apart from the first welding portion (S1) by the first distance (G1) and apart from the second welding portion (S1) by the second distance (G2).
